# EUROPÄISCHE PATENTSCHRIFT

(11) **EP 2 388 217 B1**
(45) Veröffentlichungstag und Bekanntmachung des Hinweises auf die Patenterteilung: **17.09.2014**
(21) Anmeldenummer: 11450062.2
(22) Anmeldetag: 19.05.2011
(51) Int. Cl.: B65G 53/46

(54) **Zellenradschleuse**
Cellular wheel sluice
Vanne à roue cellulaire

(30) Priorität: 21.05.2010 AT 8392010
(43) Veröffentlichungstag der Anmeldung: 23.11.2011
(73) Patentinhaber: KWB - Kraft und Wärme aus Biomasse Gesellschaft m.b.H., 8321 St. Margarethen/Raab (AT)
(72) Erfinder: Salmhofer, Manfred, 8211 Grosspesendorf (DE); Schadler, Markus, 8200 Gleisdorf (DE)
(74) Vertreter: Gibler & Poth Patentanwälte OG

(56) Entgegenhaltungen:
- EP-A1- 0 607 964
- EP-A1- 1 344 732
- DE-A1-102005 051 630
- DE-C1- 19 855 647
- US-A- 3 130 879
- US-A- 3 556 355
- US-A- 4 508 473
- US-B1- 6 641 336

## Beschreibung

Die Erfindung betrifft eine Zellenradschleuse gemäß dem Oberbegriff des Patentanspruches 1. Die Zellenradschleuse hat die Aufgabe, rieselfähiges Fördergut, im Weiteren als Fördergut bezeichnet, von der oberen Einwurföffnung zur unteren Auswurföffnung zu transportieren und zugleich eine Trennung der Einwurföffnung zur Auswurföffnung hinsichtlich einer Dichtheit zu gewährleisten, sodass im Betrieb der Zellenradschleuse die Einwurföffnung und die Auswurföffnung unterschiedlich druckbeaufschlagbar sind. Zur Gewährleistung einer derartigen Trennung der Einwurföffnung zur Auswurföffnung bildet das Zellenrad zu dem Gehäuse der Zellenradschleuse eine Dichtwirkung aus, wobei die Dichtwirkung mittels der Stege und mittels zweier Stirnstege, welche gegenüberliegend an den beiden Zellenradstirnenden des Zellenrades ausgebildet sind, gewährleistet wird. Jeweils zwei benachbarte Stege und die beiden Stirnstege begrenzen jeweils eine Einzelzelle des Zellenrades, womit das Zellenrad eine vorgebbare Anzahl an Einzelzellen aufweist.

Die zwischen dem Zellenrad und dem Gehäuse ausgebildete Dichtwirkung ist üblicherweise jedoch nicht perfekt, da ein Mindestspiel zwischen dem Zellenrad und dem Gehäuse vorhanden sein muss, um das Zellenrad um die Drehachse drehbar antreiben zu können. Bei herkömmlichen Zellenradschleusen können sich ein an der Einwurföffnung anliegender erster Gasdruck und ein an der Auswurföffnung anliegender, zum ersten Gasdruck unterschiedlicher, zweiter Gasdruck beeinflussen, indem sich eine Gasströmung vom höheren Gasdruck der beiden Gasdrücke zum niedrigeren Gasdruck der beiden Gasdrücke ausbildet. Beispielsweise kann eine derartige Gasströmung auftreten, wenn die Zellenradschleuse zum Transport eines brennbaren Fördergutes, beispielsweise Holzpellets, für eine Feuerungsanlage vorgesehen ist. Dabei sind die Auswurföffnung mit der Feuerungsanlage und die Einwurföffnung mit einem Lager zum Lagern des Fördergutes verbunden, womit der erste Gasdruck dem jeweiligen vorherrschenden Gasdruck im Lager entspricht und der zweite Gasdruck dem jeweiligen vorherrschenden Gasdruck in der Feuerungsanlage entspricht. Im Lager herrscht üblicherweise Umgebungsdruck, also in etwa 0,1MPa. Im Betrieb der Feuerungsanlage herrscht in dieser üblicherweise ein Unterdruck, also unter 0,1MPa. Bei der herkömmlichen Zellenradschleuse ergibt sich dann eine Gasströmung von der Einwurföffnung hinzu zur Auswurföffnung. Dies ist unerwünscht, jedoch üblicherweise ungefährlich. Bei Störfällen im Lager und/oder in der Feuerungsanlage oder wenn das Lager mittels einer mit Unterdruck arbeitenden Saugförderanlage befüllt wird, kann der Gasdruck im Lager jedoch geringer, insbesondere wesentlich geringer, als der Gasdruck in der heißen Feuerungsanlage sein. Bei der herkömmlichen Zellenradschleuse, stellt sich dann wiederum eine Gasströmung vom höheren der beiden Gasdrücke hinzu zum niedrigeren der beiden Gasdrücke ein, welche dann allerdings Gase, insbesondere Brenngase, von der Feuerungsanlage in das Lager leiten würde. Dabei werden - möglicherweise giftige - Gase ins Lager geleitet und im schlimmsten Fall kann das im Lager gelagerte Fördergut sogar Feuer fangen. Diese Gase können weiters an der Zellenradschleuse kondensieren, was zu einer Verschmutzung und in weiterer Folge zu einem Verkleben und einem Blockieren der Zellenradschleuse führen kann.

Aus der EP 0 607 964 A1 ist eine Zellradschleuse mit einem Gehäuse mit einer Einwurföffnung und einer Auswurföffnung, sowie mehreren Druckausgleichsöffnungen bekannt.

Aus der US 4 508 473 A ist eine Zellrudschleuse für niedrige Drücke bekannt, wobei die Zellradschleuse ein Gehäuse mit einer Einwurföffnung und einer Auswurföffnung, ein Zellrad als auch eine Abdiclatstruktur zwischen dem Gehäuse und dem Zellrad aufweist.

Aus der DE 198 55 647 C1 ist eine Zellradschleuse umfassend ein Gehäuse mit einem Zulaufsehacht und einem Auslaufschacht, und ein drehbar gelagertes Zellrad mit einer Vielzahl an Kammern bekannt.

Aus der US 6 641 336 B1 ist eine Hochdruck Beschickungsvorrichtung mit einem drehbaren Rotor in einem Gehäuse bekannt, wobei der Rotor eine Vielzahl an durchgehenden Löchern aufweist.

Aufgabe der Erfindung ist es daher eine Zellenradschleuse der eingangs genannten Art anzugeben, mit welcher die genannten Nachteile vermieden werden können und mit welcher zuverlässig gewährleistet werden kann, dass sich unabhängig von einem an der Einwurföffnung anliegenden ersten Gasdruck und einem an der Auswurtüffnung anliegenden, zum ersten Gasdruck unterschiedlichen, zweiten Gasdruck keine druckunterschiedsbedingte Gasströmung zwischen der Einwurföffnung und der Auswurföffnung ausbildet, wobei ein Austreten des Fördergutes und ein Verstopfen der Druckausgleichsöffnungen verhindert werden kann.

Erfindungsgemäß wird dies durch die Merkmale des Patentanspruches 1 erreicht.

Die erste Druckausgleichsöffnung gewährleistet, dass zumindest eine der Einzelzellen, welche im Bereich des ersten Gehäusebereichs angeordnet ist, mit dem an der ersten Druckausgleichsöffnung anliegenden Gasdruck, insbesondere mit Umgebungsdruck, bevorzugt mit in etwa 0,1MPa, beaufschlagt ist. Entlang des ersten Gehäusebereichs kann sich somit keine Gasströmung zwischen dem ersten Gasdruck und dem zweiten Gasdruck ausbilden, weil eine derartige Gasströmung durch dem an der ersten Druckausgleichsöffnung anliegenden Gasdruck unterbrochen wird. Die zweite Druckausgleichsöffnung gewährleistet, dass zumindest eine der Einzelzellen, welche im Bereich des zweiten Gehäusebereichs angeordnet ist, mit dem an der zweiten Druckausgleichsöffnung anliegenden Gasdruck, insbesondere mit Umgebungsdruck, bevorzugt mit in etwa 0,1MPa, beaufschlagt ist. Entlang des zweiten Gehäusebereichs kann sich somit ebenfalls keine Gasströmung zwischen dem ersten Gasdruck und dem zweiten Gasdruck ausbilden, weil eine derartige Gasströmung durch dem an der zweiten Druckausgleichsöffnung anliegenden Gasdruck unterbrochen wird. Dadurch kann zuverlässig gewährleistet werden, dass der an der Einwurföffnung anliegende erste Gasdruck und der an der Auswurföffnung anliegende, zum ersten Gasdruck unterschiedliche, zweite Gasdruck sich gegenseitig nicht beeinflussen und sich eine druckunterschiedsbedingte Gasströmung weder von der Einwurföffnung in Richtung der Auswurföffnung nach von der Auswurföffnung in Richtung der Einwurföffnung ausbilden kann. Dadurch kann eine hohe Betriebssicherheit eines die Feuerungsanlage, die Zellenradschleuse und das Lager umfassenden Heizsystems gewährleistet werden, da bei Verwendung der Zellenradschleuse zum Transport des Brenngutes, beispielsweise der Holzpellets, vom Lager in die Feuerungsanlage zuverlässig verhindert werden kann, dass Gase, insbesondere Brenngase, aus der Feuerungsanlage in das Lager strömen, auch wenn der Gasdruck im Lager niedriger ist als der Gasdruck in der Feuerungsanlage.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 schematisch in axonometrischer Darstellung eine vorteilhafte erste Ausführungsform des Zellenrades und schematisch die Umrisse der Finwurföffnung, der Auswurföffnung, der ersten Druckausgleichsöffnung und der zweiten Druckausgleichsöffnung eines Gehäuses einer ersten Ausführungsform;
Fig. 2 schematisch einen ersten Querschnitt durch die Zellenradschleuse einer ersten Ausführungsform umfassend das Zellenrad der Fig. 1 und das Gehäuse der ersten Ausführungsfonn mit Blickrichtung parallel zur Drehachse;
Fig. 3 schematisch einen zweiten Querschnitt durch die Zellenradschleuse der ersten Ausführungsform mit Blickrichtung parallel zur Drehachse;
Fig. 4 schematisch einen dritten Querschnitt durch die Zellenradschleuse der ersten Ausführungsform mit Blickrichtung parallel zur Drehachse und entgegen der Blickrichtung in den Fig. 2 und 3;
Fig. 5 schematisch in Seitenansicht eine zweite Ausführungsform des Zellenrades; und
Fig. 6 schematisch im Querschnitt geschnitten in der in Fig. 5 dargestellten Schnittebene A-A das Zellenrad der Fig. 5;

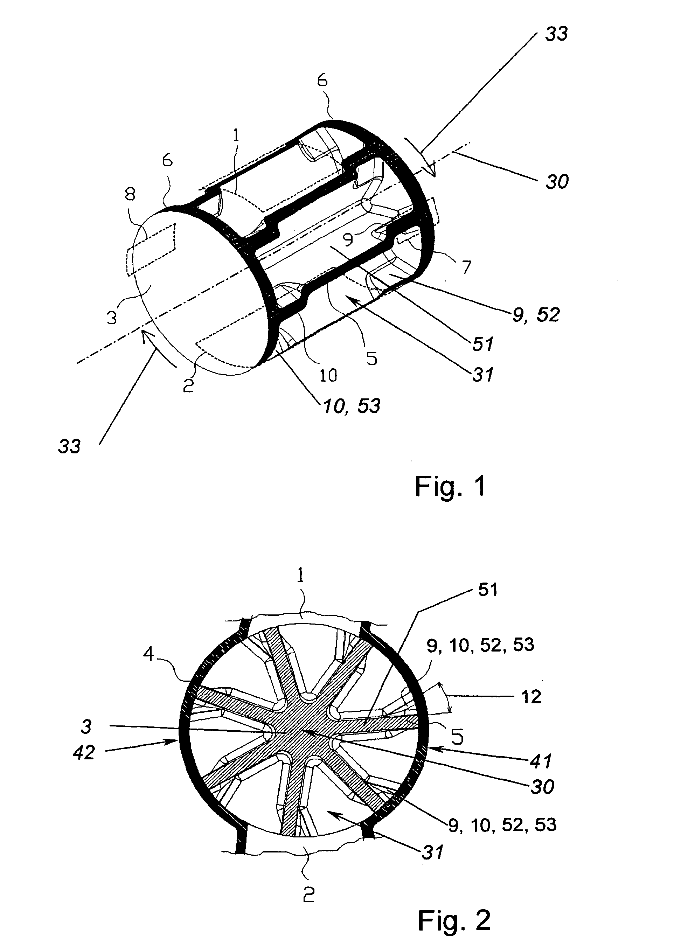

Die Fig. 1 bis 4 zeigen eine Zellenradschleuse zum Fördern und/oder Dosieren von rieselfähigem Fördergut, wobei die Zellenradschleuse ein Gehäuse 4 aufweist, in welchem ein Zellenrad 3, mit einer vorgebbaren Anzahl an Stegen 5, um eine Drehachse 30 drehbar gelagert ist, wobei das Gehäuse 4 eine Einwurföffnung 1 sowie eine Auswurföffnung 2 aufweist.Damit kann zuverlässig gewährleistet werden, dass sich ein an der Einwurföffnung 1 anliegender erster Gasdruck und ein an der Auswurföffnung 2 anliegender, zum ersten Gasdruck unterschiedlicher, zweiter Gasdruck nicht gegenseitig beeinflussen, ist bei der Zellenradschleuse vorgesehen, dass an einem ersten Gehäusebercich 41 zwischen der Einwurföffnung 1 und der Auswurföffnung 2 eine erste Druckausglcichsöffnung 7 angeordnet ist, dass an einem zweiten Gehäusebereich 42 zwischen der Einwurföffnung 1 und der Auswurföffnung 2 eine zweite Druckausgleichsöffnung 8 angeordnet ist, und dass die erste Druckausgleichsöffnung 7 gegenüberliegend der zweiten Druckausgleichsöffnung 8 angeordnet ist.

Rieselfähiges Fördergut ist auch unter der Bezeichnung Schüttgut bekannt. Im Weiteren wird das rieselfähiges Fördergut kurz als Fördergut bezeichnet.

Das Zellenrad 3 umfasst weiters zwei Stirnstege 6, wozu jeweils einer der beiden Stirnstege 6 jeweils im Bereich eines zweier Zellenradstirnenden des Zellenrades 3 ausgebildet ist. Zwei zueinander benachbarte Stege 5 und die beiden Stirnstege 6 umschließen jeweils einen im Weiteren mit Einzelzelle 31 bezeichneten Hohlraum zum Fördern des Fördergutes. Bei Drehung des Zellenrades 3 um die Drehachse 30 kann eine an der Einwurföffnung 1 vorbeibewegte Einzelzelle 31 das Fördergut aufnehmen und dosiert zur Auswurföffnung 2 fördern.

Die erste Druckausgleichsöffnung 7 gewährleistet, dass zumindest eine der Einzelzellen 31 im Bereich des ersten Gehäusebereichs 41 mit dem an der ersten Druckausgleichsöffnung 7 anliegenden Druck, insbesondere mit Umgebungsdruck, bevorzugt mit in etwa 0,1MPa, beaufschlagbar ist. Mittels der ersten Druckausgleichsöffnung 7 wird eine, sich aufgrund der Drehbewegung des Zellenrades 3 im Bereich der ersten Druckausgleichsöffnung 7 befindliche, der Einzelzellen 31 somit druckentlastet, womit wenigstens eine der Einzelzellen 31 im Bereich des ersten Gehäusebereichs 41 druckentlastet ist. Die zweite Druckausgleichsöffnung 8 gewährleistet, dass zumindest eine weitere der Einzelzellen 31 im Bereich des zweiten Gehäusebereichs 42 mit dem an der zweiten Druckausgleichsöffnung 8 anliegenden Druck, insbesondere mit Umgebungsdruck, bevorzugt mit in etwa 0,1MPa, beaufschlagbar ist. Mittels der zweiten Druckausgleichsöffnung 8 wird eine weitere, sich aufgrund der Drehbewegung des Zellenrades 3 im Bereich der zweiten Druckausgleichsöffnung 8 befindliche, der Einzelzellen 31 somit ebenfalls druckentlastet, womit weiters wenigstens eine weitere der Einzelzellen 31 im Bereich des zweiten Gehäusebereichs 42 druckentlastet ist. Vorteilhaft dabei ist, dass sowohl entlang des ersten Gehäusebereichs 41 als auch entlang des zweiten Gehäusebereichs 42 keine druckunterschiedsbedingte Gasströmung zwischen der Einwurföffnung 1 und der Auswurföffnung 2 erfolgen kann, weil diese druckunterschiedsbedingte Gasströmung durch jeweils wenigstens eine druckentlastete Einzelzelle 31 unterbrochen wird. Dadurch kann zuverlässig gewährleistet werden, dass ein im Betrieb der Zellenschleuse an der an der Einwurföffnung 1 anliegende erste Gasdruck und ein an der Auswurföffnung 2 anliegender, zum ersten Gasdruck unterschiedlicher, zweiter Gasdruck sich gegenseitig nicht beeinflussen. Bei Verwendung der Zellenradschleuse zum Transport eines brennbaren Fördergutes, beispielsweise Holzpellets, von einem Lager in eine Feuerungsanlage, kann derart zuverlässig verhindert werden, dass Gase, insbesondere Brenngase, aus der Feuerungsanlage in das Lager strömen, auch wenn der Gasdruck im Lager niedriger als der Gasdruck in der Feuerungsanlage ist. Dadurch kann eine hohe Betriebssicherheit eines die Feuerungsanlage, die Zellenradschleuse und das Lager umfassenden Heizsystems gewährleistet werden. Weiters kann derart gewährleistet werden, dass Gase an der Zellenradschleuse in lediglich derart geringem Ausmaß kondensieren, dass ein durch das Kondensieren von Gasen in der Zellenradschleuse bewirktes Verkleben und Blockieren der Zellenradschleuse zuverlässig verhindert ist.

Eine durch einen Druckunterschied bedingte Gasströmung, also die druckunterschiedsbedingte Gasströmung, kann auch als Druckausgleichsströmung bezeichnet werden, und ist vom höheren Druckniveau hin zum niedrigeren Druckniveau gerichtet.

Die Anzahl der Einzelzellen 31, welche der Anzahl der Stege 5 entspricht, ist so gewählt, dass in jeder Stellung des Zellenrades 3 eine mit der ersten Druckausgleichsöffnung 7 zum Druckausgleich in Wirkverbindung stehende der Einzelzellen 31 sowohl in Richtung der Einwurföffnung 1 als auch in Richtung der Auswurföffnung 2 durch jeweils wenigstens einen Steg 5 abgedichtet ist. Dadurch werden die Druckausgleichsströmung zwischen der Einwurföffnung 1 und der ersten Druckausgleichsöffnung 7 sowie die Druckausgleichsströmung zwischen der Auswurtöffnung 2 und der ersten Druckausgleichsöffnung 7 behindert, insbesondere weit gehend unterbunden. Insbesondere kann das Zellenrad 3 dazu zumindest sechs, insbesondere zumindest sieben, Finzelzellen 31 aufweisen.

Die Anzahl der Einzelzellen 31 ist weiters so gewählt, dass in jeder Stellung des Zellenrades 3 eine mit der zweiten Druckausgleichsöffnung 8 zum Druckausgleich in Wirkverbindung stehende der Einzelzellen 31 sowohl in Richtung der Einwurföffnung 1 als auch in Richtung der Auswurföffnung 2 durch jeweils wenigstens einen Steg 5 abgedichtet ist. Dadurch werden die Druckausgleichsströmung zwischen der Einwurföffnung 1 und der zweiten Druckausgleichsöffnung 8 sowie die Druckausgleichsströmung zwischen der Auswurföffnung 2 und der zweiten Druckausgleichsöffnung 8 behindert, insbesondere weit gehend unterbunden. Insbesondere kann das Zellenrad 3 dazu zumindest sechs, insbesondere zumindest sieben, Einzelzellen 31 aufweisen.

Bevorzugt weisen die Einzelzellen 31 dieselbe Größe auf, womit jede der Einzelzellen 31 das im Wesentlichen gleiche Volumen aufweist.

Der Steg 5 kann insbesondere einen radial verlaufenden ersten Teilsteg 51 aufweisen.

In der Betriebslage der Zellenradschleuse kann insbesondere vorgesehen sein, dass die Einwurföffnung 1 über dem Zellenrad 3 und die Auswurföffnung 2 unter dem Zellenrad 3 angeordnet sind, sodass das Fördergut schwerkraftbedingt in die Einzelzellen 31 des Zellenrades 3 hineinfällt und schwerkraftbedingt aus den Einzelzellen 31 herausfällt. Der erste Gehäusebereich 41 und der zweite Gehäusebereich 42 sind in der Betriebslage somit seitlich angeordnet, womit auch die Druckausgleichsöffnung 7 und die zweite Druckausgleichsöffnung 8 in Betriebslage seitlich angeordnet sind.

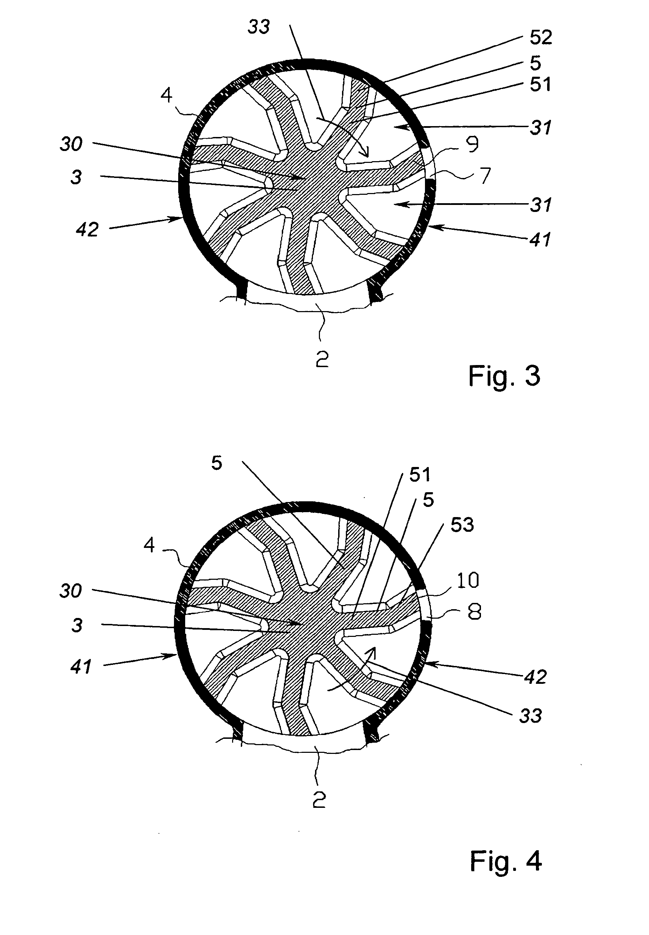

In vorteilhafter Anordnung der ersten Druckausgleichsöffnung 7 kann diese in etwa im rechten Winkel zur Einwurföffnung 1 und/oder zur Auswurföffnung 2 angeordnet sein, wie dies schematisch in Fig. 1 und 3 dargestellt ist. Dadurch kann die Zellenradschleuse kompakte Abmessungen aufweisen.

In vorteilhafter Anordnung der zweiten Druckausgleichsöffnung 8 kann diese in etwa im rechten Winkel zur Einwurföffnung 1 und/oder zur Auswurföffnung 2 angeordnet sein, wie dies schematisch in Fig. 1 und 4 dargestellt ist. Dadurch kann die Zellenradschleuse ebenfalls kompakte Abmessungen aufweisen.

Zur weiteren Vermeidung der Druckausgleichsströmung zwischen der Einwurföffnung 1 und der Auswurföffnung 2 kann in vorteilhafter Weiterbildung des Gehäuses 4 vorgesehen sein, dass an wenigstens einer Stirnseite des Gehäuses 4 eine dritte Druckausgleichsöffnung angeordnet ist. Auch bei unperfekter Abdichtung der Stirnstege 6 zum Gehäuse 4 kann derart ein Druckausgleich zwischen dem ersten Gasdruck und dem zweiten Gasdruck zuverlässig verhindert werden.

In vorteilhafter Ausgestaltung des Gehäuses 4 kann vorgesehen sein, dass zwischen einem ersten Bereich des Gehäuses 4 und dem zu diesem ersten Bereich benachbarten Stirnsteg 6 ein erster Hohlraum ausgebildet ist. In diesem Zusammenhang kann zur weiteren Vermeidung der Druckausgleichsströmung zwischen der Einwurföffnung 1 und der Auswurföffnung 2 in vorteilhafter Weiterbildung des Gehäuses 4 vorgesehen sein, dass die erste Druckausgleichsöffnung 7 weiters in Wirkverbindung mit dem ersten Hohlraum ist. Dadurch ist auch der erste Hohlraum mit dem an der ersten Druckausgleichsöffnung 7 vorherrschenden Gasdruck beaufschlagt. Auch bei unperfekter Abdichtung des ersten Hohlraumes kann derart die Ausbildung einer Druckausgleichsströmung zwischen der Einwurföffnung 1 und der Auswurföffnung 2 zuverlässig verhindert werden.

In vorteilhafter Ausgestaltung des Gehäuses 4 kann vorgesehen sein, dass zwischen einem dem ersten Bereich gegenüberliegenden zweiten Bereich des Gehäuses 4 und dem zu diesem zweiten Bereich benachbarten Stirnsteg 6 ein zweiter Hohlraum ausgebildet ist. In diesem Zusammenhang kann zur weiteren Vermeidung der Druckausgleichsströmung zwischen der Einwurföffnung 1 und der Auswurföffnung 2 in vorteilhafter Weiterbildung des Gehäuses 4 vorgesehen sein, dass die zweite Druckausgleichsöffnung 8 weiters in Wirkverbindung mit dem zweiten Hohlraum ist, womit auch der zweite Hohlraum mit dem an der zweiten Druckausgleichsöffnung 8 vorherrschenden Gasdruck beaufschlagt ist. Auch bei unperfekter Abdichtung des zweiten Hohlraumes kann derart die Ausbildung einer Druckausgleichsströmung zwischen der Einwurföffnung 1 und der Auswurföffnung 2 zuverlässig verhindert werden.

Das Fördergut kann insbesondere rieselfähig, beispielsweise granulaförmig und/oder pelletförmig, insbesondere als Holzpellet, ausgebildet sein. Damit ein hoher Befüllungsgrad der Einzelzellen 31 und somit kompakte Abmessungen der Zellenradschleuse bei einem hohen Durchsatz gewährleistet werden können, und dennoch ein Austreten des rieselfähigen Förderguts aus der ersten Druckausgleichsöffhung 7 und aus der zweiten Druckausgleichsöffnung 8 vermieden werden kann, kann in vorteilhafter Weise vorgesehen sein, dass wenigstens ein Steg 5 wenigstens ein Rückhaltemittel 9, 10 zum Rückhalten des Förderguts derart aufweist, dass das Fördergut an einem Austreten in die erste Druckausgleichsöffnung 7 und/oder in die zweite Druckausgleichsöffnung 8 gehindert ist. Daher, dass das wenigstens eine Rückhaltemittel 9, 10 derart ausgebildet ist, dass das Fördergut an einem Austreten in die erste Druckausgleichsöffnung 7 und/oder in die zweite Druckausgleichsöffnung 8 gehindert wird. Bevorzugt ist daher vorgesehen, dass wenigstens ein Steg 5 ein Rückhaltemittel 9, 10 aufweist, zum Hindern des Förderguts vor einem Austreten in die erste Druckausgleichsöffnung 7 und/oder in die zweite Druckausgleichsöffnung 8. Dazu wird der Steg 5 gezielt derart geometrisch verändert, um das rieselfähige Fördergut in der Einzelzelle 31 zurückzuhalten, wenn Fördergut in der jeweiligen Einzelzelle 31 angrenzend zur ersten Druckausgleichsöffnung 7 oder zur zweiten Druckausgleichsöffnung 8 gefördert wird. Insbesondere können sämtliche Stege 5 wenigstens ein Rückhaltemittel 9, 10 umfassen.

Insbesondere kann der Steg 5 zwei zueinander beabstandete Rückhaltemittel 9, 10 aufweisen, wobei eines der beiden ein erstes Rückhaltemittel 9 und das andere der beiden ein zweites Rückhaltemittel 10 ist. Das erste Rückhaltemittel 9 ist ausgebildet, um ein Austreten des rieselfähigen Förderguts aus der ersten Druckausgleichsöffnung 7 zu vermeiden. Das zweite Rückhaltemittel 10 ist ausgebildet, um ein Austreten des rieselfähigen Förderguts aus der zweiten Druckausgleichsöffnung 8 zu vermeiden.

Um das Austreten des rieselfähigen Förderguts aus der ersten Druckausgleichsöffnung 7 und aus der zweiten Druckausgleichsöffnung 8 zu vermeiden kann insbesondere vorgesehen sein, dass das erste Rückhaltemittel 9 insbesondere wenigstens dieselbe Längserstreckung wie die Längserstreckung der ersten Druckausgleichsöffnung 7 und dass das zweite Rückhaltemittel 10 insbesondere wenigstens dieselbe Längserstreckung als die Längserstreckung der zweiten Druckausgleichsöffnung 8 aufweisen, wobei die Längserstreckungen in Richtung parallel zur Drehachse 30 gemessen werden.

In vorteilhafter Weiterbildung des Zellenrades 3 kann weiters vorgesehen sein, dass das Rückhaltemittel 9, 10 lediglich entlang jener Randbereiche des Steges 5 angeordnet ist, welche bei Drehung des Zellenrades 3 an der ersten und an der zweiten Druckausgleichsöffnung 7, 8 vorbei streichen, wie dies bei der ersten Ausführungsform des Zellenrades 3 vorgesehen ist.

Zur Ausbildung des Rückhaltemittels 9, 10 kann insbesondere vorgesehen sein, dass - in einem zur Drehachse 30 normalen Querschnitt durch das Zellenrad 3 gesehen - der Steg 5 wenigstens bereichsweise schaufelförmig ausgebildet ist, wie dies schematisch in den Fig. 3 und 4 dargestellt ist. Der dabei wenigstens bereichsweise erhöhte Rand des Stegs 5 verhindert - gleich einer Schaufel - ein seitliches Abrutschen des Fördergutes, sodass ein Austreten des rieselfähigen Förderguts aus einer der Druckausgleichsöffnungen 7, 8 verhindert werden kann.

Bei Drehung des Zellenrades 3 bewegen sich die Stege 5 auf einer Seite der Zellenradschleuse von der Einwurföffnung 1 kreisförmig um die Drehachse 30 nach unten zur Auswurföffnung 2 und auf der anderen Seite der Zellenradschleuse von der Auswurföffnung 2 kreisförmig um die Drehachse 30 nach oben zur Einwurföffnung 1.

Bevorzugt kann vorgesehen sein, dass das Zellenrad 3 eine bevorzugte Förderdrehrichtung 33 aufweist, wie dies bei der ersten Ausführungsform der Zellenradschleuse vorgesehen und in den Fig. 1, 3 und 4 schematisch dargestellt ist. Im Betrieb der Zellenradschleuse wird das Fördergut hiebei im Wesentlichen lediglich entlang des ersten Gehäusebereichs 41 von der Einwurföffnung 1 zur Auswurföffnung 2 gefördert, womit diese Seite der Zellenradschleuse eine Förderseite der Zellenradschleuse ist. Die entlang des zweiten Gehäusebereichs 42 bewegten Einzelzellen 31 des Zellenrades 3 werden hiebei üblicherweise im Wesentlichen fördergutfrei bewegt, wobei am Steg 5 anhaftende Partikel, insbesondere Staubpartikel, verbliebenes Fördergut und/oder verbliebene Fördergutbruchstücke jedoch auch entlang des zweiten Gehäusebereichs 42 gefördert werden können. Derartige Partikel, insbesondere Staubpartikel, verbliebenes Fördergut und/oder verbliebene Fördergutbruchstücke werden im Weiteren als Fördergutreste bezeichnet. In diesem Sinn bildet jene Seite der Zellenradschleuse, auf welcher sich der zweite Gehäusebereich 42 befindet, somit eine Leerseite der Zellenradschleuse. Bei der vorteilhaften Zellenradschleuse kann somit vorgesehen sein, Fördergut im Wesentlichen lediglich im Bereich der Förderseite der Zellenradschleuse und lediglich Fördergutreste im Bereich der Leerseite der Zellenradschleuse zu fördern, wobei die Zellenradschleuse an deren Förderseite und an deren Leerseite jeweils eine der beiden Druckausgleichsöffnungen 7, 8 umfasst und wobei die Rückhaltemittel 9, 10 ausgebildet sind, um ein Austreten von Fördergut an der Förderseite und ein Austreten von Fördergutresten an der Leerseite zu verhindern.

In diesem Zusammenhang kann insbesondere vorgesehen sein, dass das Zellenrad 3 lediglich in die bevorzugte Förderdrehrichtung 33 antreibbar ist.

Um ein allfälliges Blockieren des Zellenrades 3 im Gehäuse 4 einfach beheben zu können, kann bevorzugt vorgesehen sein, dass das Zellenrad 3 in vorteilhafter Weiterbildung sowohl in die bevorzugte Förderdrehrichtung 33 als auch in die Gegenrichtung zur bevorzugten Förderdrehrichtung 33 antreibbar ist. Bei einem Blockieren des Zellenrades 3 im Gehäuse 4 kann das Zellenrad 3 dann zurückgedreht werden, um die Blockade zu lösen.

In besonders vorteilhafter Weise kann vorgesehen sein, dass das Zellenrad 3 die bevorzugte Förderdrehrichtung 33 aufweist, dass der Steg 5 den radial verlaufenden ersten Teilsteg 51 und wenigstens einen an diesen ersten Teilsteg 51 anschließenden zweiten Teilsteg 52 aufweist, und dass der zweite Teilsteg 52 zur Ausbildung des ersten Rückhaltemittels 9 gegen die bevorzugte Förderdrehrichtung 33 gegenüber dem ersten Teilsteg 51 abgewickelt ist, wie dies schematisch in Fig. 1 und 3 dargestellt ist. Dadurch gewährleistet der zweite Teilsteg 52, dass Fördergut nicht aus der an der ersten Druckausgleichsöffnung 7 vorbeibewegten Einzelzelle 31 herausfällt.

Im weiteren kann vorgesehen sein, dass das Zellenrad 3 den radial verlaufenden ersten Teilsteg 51 und wenigstens einen an diesen ersten Teilsteg 51 anschließenden dritten Teilsteg 53 aufweist, und dass der dritte Teilsteg 53 zur Ausbildung des zweiten Rückhaltemittels 10 in die bevorzugte Förderdrehrichtung 33 gegenüber dem ersten Teilsteg 51 abgewickelt ist, wie dies schematisch in Fig. 1 und 4 dargestellt ist. Dadurch gewährleistet der dritten Teilsteg 53, dass Fördergut bzw. Fördergutreste nicht aus der an der zweiten Druckausgleichsöffnung 8 vorbeibewegten Einzelzelle 31 herausfällt.

Insbesondere kann vorgesehen sein, dass das Zellenrad 3 die bevorzugte Förderdrehrichtung 33 aufweist, dass der Steg 5 den radial verlaufenden ersten Teilsteg 51, wenigstens einen an diesen ersten Teilsteg 51 anschließenden zweiten Teilsteg 52 zur Ausbildung des ersten Rückhaltemittels 9 und wenigstens einen an diesen ersten Teilsteg 51 anschließenden dritten Teilsteg 53 zur Ausbildung des zweiten Rückhaltemittels 10 aufweist, wie dies bei der ersten Ausführungsform des Zellenrades 3 der Fall ist. Fig. 2 zeigt schematisch einen zur Drehachse 30 normalen Querschnitt durch die Mitte der Zellenradschleuse. Dieser Querschnitt schneidet die ersten Teilstege 51 der Stege 5, das Gehäuse 4, die Einwurföffnung 1 und die Auswurföffnung 2. Bei einer Blickrichtung in Richtung des in Fig. 1 hinteren der beiden Stirnstege 6 ist in diesem Querschnitt der zweite Teilsteg 52 sichtbar. Bei einer Blickrichtung in Richtung des in Fig. 1 vorderen der beiden Stirnstege 6 ist in diesem Querschnitt der dritte Teilsteg 53 sichtbar. Insbesondere kann das Zellenrad 3 symmetrisch derart ausgebildet sein, dass die Funktionsweise des Zellenrades 3 in beiden möglichen Einbaulagen des Zellenrades 3 im Gehäuse 4 dieselbe ist, wobei vorgesehen ist, dass der Winkel 12 des zweiten Teilstegs 52 zum ersten Teilsteg 51 gleich dem Winkel 12 des dritten Teilstegs 53 zum ersten Teilsteg 51 ist. Derart kann vorgesehen sein, dass das Zellenrad 3 in jeder der beiden möglichen Einbaulagen funktionserfüllend im Gehäuse 4 moniert ist.

Fig. 3 zeigt einen zweiten, zur Drehachse 30 normalen Querschnitt durch die Zellenradschleuse der ersten Ausführungsform, wobei die Blickrichtung in Fig. 3 in Richtung des in Fig. 1 hinteren der beiden Stirnstege 6 gerichtet ist. In diesem Querschnitt sind der erste Teilsteg 51 und der zweite Teilsteg 52 geschnitten dargestellt. In diesem Querschnitt ist weiters das Gehäuse 4 geschnitten dargestellt, wobei dieser Querschnitt durch die erste Druckausgleichsöffnung 7 und durch die Auswurföffnung 2 nicht jedoch durch die Einwurföffnung 1 verläuft. Bei Drehung des Zellenrades 3 bewegen sich die Stege 5 auf der Förderseite der Zellenradschleuse von der Einwurföffnung 1 kreisförmig um die Drehachse 30 nach unten zur Auswurföffnung 2. Das oben eingebrachte Fördergut, welches nicht das gesamte Volumen der Einzelzelle 31 ausfüllen sollte, stemmt sich gegen den zweiten Teilsteg 52, womit das Fördergut in diesem Bereich solange vom Gehäuse 4 ferngehalten wird, bis die Stegkante des Steges 5 die erste Druckausgleichsöffnung 7 passiert hat. Dies kann besonders zuverlässig gewährleistet werden, wenn sich die untere Kante der ersten Druckausgleichsöffnung 7 oberhalb der Drehachse 30 befindet. Bei Weiterdrehung des Zellenrades 3 kann das von der Einzelzelle 31 mitbewegte Fördergut aufgrund der Schwerkraft am Gehäuse 4 anliegen und schlussendlich durch die Auswurföffnung 2 das Zellenrad 3 verlassen.

Fig. 4 zeigt einen dritten, zur Drehachse 30 normalen Querschnitt durch die Zellenradschleuse der ersten Ausführungsform, wobei die Blickrichtung in Fig. 3 in Richtung des in Fig. 1 vorderen der beiden Stirnstege 6 gerichtet ist. In diesem Querschnitt sind der erste Teilsteg 51 und der dritte Teilsteg 53 geschnitten dargestellt. In diesem Querschnitt ist weiters das Gehäuse 4 geschnitten dargestellt, wobei dieser Querschnitt durch die zweite Druckausgleichsöffnung 8 und durch die Auswurföffnung 2 nicht jedoch durch die Einwurföffnung 1 verläuft. Bei Drehung des Zellenrades 3 bewegen sich die Stege 5 auf der Leerseite der Zellenradschleuse von der Auswurföffnung 2 kreisförmig um die Drehachse 30 nach oben zur Einwurföffnung 1. Am Steg 5 anhaftende Partikel, insbesondere Staubpartikel, verbliebenes Fördergut und/oder verbliebene Fördergutbruchstücke, können am zur Auswurföffnung 2 angrenzenden, leerseitigen zweiten Gehäusebereich 42, wo der Steg 5 weiterhin steil nach unten zeigt, vom Steg 5 abfallen und innen entlang des Gehäuses 4 nach oben mitgenommen werden. In diesem Fall gewährleistet das zweite Rückhaltemittel 10, insbesondere der dritte Teilsteg 53, dass diese mitgenommen Partikel nicht in die zweite Druckausgleichsöffnung 8 fallen, insbesondere wenn die untere Kante der zweiten Druckausgleichsöffnung 8 sich oberhalb der Drehachse 30 befindet.

Bei einer anderen Ausgestaltung des Zellenrades 3 kann vorgesehen sein, dass der Winkel 12 des zweiten Teilstegs 52 zum ersten Teilsteg 51 ungleich dem Winkel 12 des dritten Teilstegs 53 zum ersten Teilsteg 51 ist. In vorteilhafter erster Ausbildung des zweiten Teilstegs 52 und/oder des dritten Teilstegs 53 können diese in einem Winkel 12 zwischen 15° und 60°, insbesondere zwischen 20° und 45°, schräg zum ersten Teilsteg 51 stehen.

In vorteilhafter Weiterbildung der ersten Ausbildung des zweiten Teilstegs 52 und/oder des dritten Teilstegs 53 können diese im Winkel 12 schräg zur Hauptfläche 51 stehen, welcher in etwa halb so groß ist, wie der im Querschnitt durch das Zellenrad 3 gemessene Winkel zwischen zwei zueinander benachbarten Stegen 5. Dadurch kann ein Austreten des rieselfähigen Förderguts aus der ersten Druckausgleichsöffnung 7 besonders zuverlässig vermieden werden.

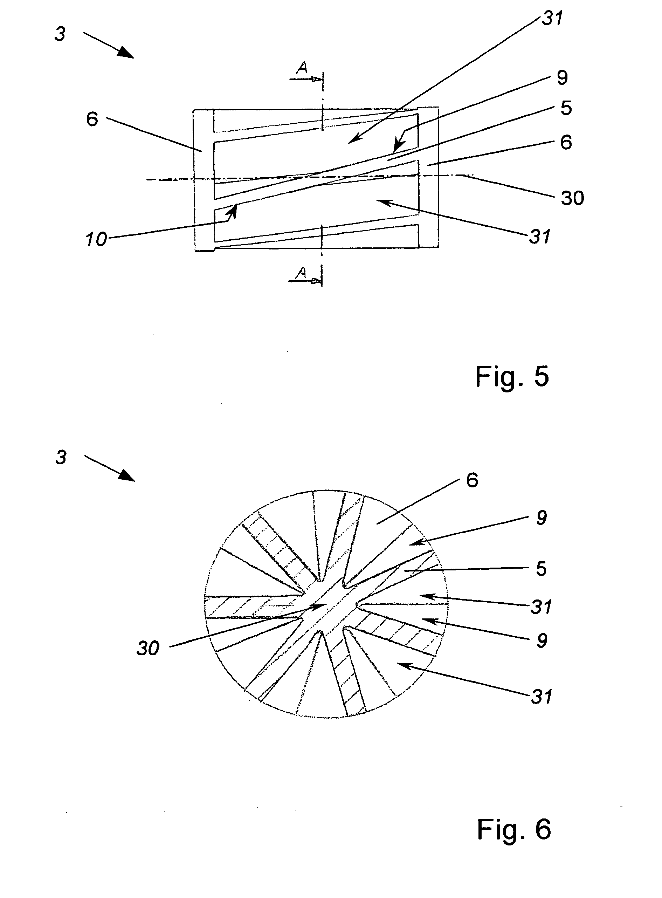

In einer zweiten Ausführungsform des Zellenrades 3 ist vorgesehen, dass zur Ausbildung des Rückhaltemittels 9, 10 der Steg 5 gegenüber der Drehachse 30 verwunden ist. Die zweite Ausführungsform des Zellenrades 3 ist schematisch in Seitenansicht in Fig. 5 und schematisch im Schnitt gemäß der in Fig. 5 dargestellten Schnittebene A-A in Fig. 6 dargestellt. Insbesondere kann jeder der Stege 5 dementsprechend verwunden sein, wie dies ebenfalls in den Fig. 5 und 6 schematisch dargestellt ist. Das Verwinden des Steges 5 bewirkt in vorteilhafter Weise ebenfalls die oben beschrieben Rückhaltewirkung zum Zurückhalten des Fördergutes.

Die Verwindung kann insbesondere derart ausgebildet sein, dass der Steg 5 benachbart zum Zentrum des Zellenrades 3 parallel zur Drehachse 30 ausgebildet ist und dass der Steg 5, insbesondere eine Oberfläche des Steges 5, mit steigendem Normalabstand zum Zentrum des Zellenrades 3 einen größer werdenden Winkel, insbesondere einen im Wesentlichen kontinuierlich größer werdenden Winkel, zur Drehachse 30 einschließt, wie dies ebenfalls bei der zweiten Ausführungsform des Zellenrades 3 vorgesehen ist.

In vorteilhafter Kombination der ersten Ausführungsform des Zellenrades 3 und der zweiten Ausführungsform des Zellenrades 3 kann in einer - nicht dargestellten - dritten Ausführungsform des Zellenrades 3 vorgesehen sein, dass der Steg 5 den ersten Teilsteg 51, einen gemäß der zweiten Ausführungsform des Zellenrades 3 verwundenen vierten Teilsteg sowie den zweiten und/oder dritten Teilsteg 52, 53 aufweist. Dabei können die Einzelzellen 31 ein besonders großes Volumen aufweisen und eine besonders hohe Rückhaltewirkung auf das Fördergut bewirken, um ein Austreten des rieselfähigen Förderguts aus der ersten Druckausgleichsöffnung 7 und/oder aus der zweiten Druckausgleichsöffnung 8 zu vermeiden. In einer - nicht dargestellten - vierten Ausführungsform des Zellenrades 3 ist vorgesehen, dass der Steg 5 zur Ausbildung der Rückhaltewirkung zum Zurückhalten des Fördergutes und/oder der Fördergutreste an den Randbereichen des Steges 5 angeordnete Vorsprünge, insbesondere Zinken und/oder Rippen, umfasst. Auch derart ist das Zellenrad 3 wenigstens bereichsweise schaufelförmig ausgebildet.

In einer - nicht dargestellten - fünften Ausführungsform des Zellenrades 3 ist vorgesehen, dass der Steg 5 zur Ausbildung der Rückhaltewirkung zum Zurückhalten des Fördergutes und/oder der Fördergutreste wenigstens bereichsweise eine konkave Oberfläche aufweist und derart wenigstens bereichsweise löffelförmig ausgebildet ist, sodass das Fördergut, wenn es benachbart zur ersten Druckausgleichsöffnung 7 oder zur zweiten Druckausgleichsöffnung 8 gefördert wird, wenigstens teilweise in diese konkave Oberfläche hineinrutscht. Auch derart ist das Zellenrad 3 wenigstens bereichsweise schaufelförmig ausgebildet. Auch in diesem Zusammenhang kann der Steg 5 weiterhin einen ersten Teilsteg 51 aufweisen und/oder teilweise verwunden sein.

Insbesondere kann die in Richtung parallel zur Drehachse 30 gemessene Längserstreckung der ersten und der zweiten Druckausgleichsöffnung 7, 8 geringer sein, als die ebenfalls in Richtung der parallel zur Drehachse 30 gemessene Längserstreckung der Stege 5, wie dies schematisch in Fig. 1 dargestellt ist und beim Gehäuse der ersten Ausführungsform der Fall ist.

In diesem Zusammenhang kann insbesondere vorgehen sein, dass die erste Druckausgleichsöffnung 7 benachbart zu einem der beiden Stirnstege 6 angeordnet ist und dass die zweite Druckausgleichsöffnung 8 benachbart zum anderen der beiden Stirnstege 6 angeordnet ist, wie dies bei der ersten Ausführungsform der Zellenradschleuse vorgesehen ist und schematisch in den Fig. 1 bis 4 dargestellt ist. Dadurch kann der Austritt von Fördergut, welches beispielsweise brennbar oder giftig sein kann, aus den Druckausgleichsöffnungen 7,8 verringert werden, da der Füllstand des Fördergutes im Bereich der Stirnstege 6 am geringsten ist. Weiters können dadurch Rückhaltemittel 9,10 an den Stegen 5 im Bereich der Stirnstege 6 angeordnet werden, welche den Austritt von Fördergut verhindern, ohne den Ent- und/oder Befüllvorgang der Zellradschleuse wesentlich zu beeinträchtigen. Da die Druckausgleichsöffnungen 7,8 an gegenüberliegenden Bereichen des Gehäuses 4 und im Bereich von gegenüberliegenden Stirnstegen 6 angeordnet ist, können in vorteilhafter Weise die Rückhaltemittel 9,10 unter Bezugnahme der bevorzugten Förderdrehrichtung 33 derart ausgebildet werden, das die rückhaltende Wirkung der Rückhaltemittel 9,10 bei einer um 180° verdrehte Betriebslage der Zellradschleuse gleich bleibt.

Folgend wird die Anordnung der Druckausgleichsöffnung 7, 8, der Einwurföffnung 1 und der Auswurföffnung 2 in der vorteilhaften ersten Ausführungsform, wie in Fig. 1 bis 4 dargestellt, beschrieben. In der vorgesehenen Betriebslage ist die Drehachse 30 in einer horizontalen Lage. Die Einwurföffnung 1 befindet sich in der vorgesehenen Betriebslage oberhalb der Drehachse 30, womit das Fördergut mithilfe der Gravitation durch die Einwurföffnung 1 in die Zellradschleuse gelangen kann. Die Auswurföffnung 2 befindet sich fluchtent unterhalb der Einwurföffnung 1 auf der gegenüberliegenden Seite der Zellradschleuse, wodurch das Fördergut mithilfe der Gravitation durch die Auswurföffnung 2 aus der Zellradschleuse gelangen kann. Die erste Druckausgleichsöffnung 7 und die zweite Druckausgleichsöffnung 8 sind hierbei in der vorgesehenen Betriebslage im Wesentlichen auf der Höhe der Drehachse 30 angeordnet, wobei die Drehachse 30, entlang der Drehachse 30 gesehen, zwischen den Druckausgleichsöffnungen 7, 8 verläuft. Weiters ist die erste Druckausgleichsöffnung 7 benachbart zu einem der beiden Stirnstege 6 angeordnet und die zweite Druckausgleichsöffnung 8 benachbart zum anderen der beiden Stirnstege 6 angeordnet. Die Randbereiche der Stege 5 können hierbei in drei Randabschnitte untergliedert sein. Hierbei streicht der erste Randabschnitt an der ersten Druckausgleichsöffnung 7, der zweite Randabschnitt an der Einwurföffnung 1, und der dritte Randabschnitt an der zweiten Druckausgleichsöffnung 8 vorbei. Der erste Randabschnitt, der zweite Randabschnitt und der dritte Randabschnitt sind hierbei angrenzend oder zueinander beabstandet angeordnet, wodurch die Rückhaltemittel 9,10, welche im ersten Randabschnitt und im dritten Randabschnitt angeordnet sind, die Einwurföffnung 1 nicht blockieren. Daher kann, wie in Fig. 1 ersichtlich ist, vorgesehen sein, dass die Randbereiche des Steges 5, welche bei Drehung des Zellenrades 3 an der ersten und an der zweiten Druckausgleichsöffnung 7, 8 vorbei streichen, von den Randbereichen des Steges 5, welche bei Drehung des Zellenrades 3 an der Einwurföffnung 1 vorbei streichen, angrenzend oder beabstandet sein. Die in Richtung parallel zur Drehachse 30 gemessene Längserstreckung der Auswurföffnung 2 ist größer als die in Richtung parallel zur Drehachse 30 gemessene Längserstreckung der Einwurföffnung 1, wie in Fig. 1 ersichtlich. Die Auswurföffnung 2 erstreckt sich weiters zumindest teilweise in den ersten Randabschnitt und den dritten Randabschnitt, wodurch das Fördergut in diesen Randbereichen ebenfalls entleert wird.

Dem jeweiligen Anwendungsfall entsprechend kann jede der beschriebenen Ausführungsformen des Zellenrades 3 mit dem vorstehend beschriebenen Gehäuse 4 kombiniert werden, sodass viele unterschiedlicher Ausführungsformen der Zellenradschleuse realisierbar sind. In der ersten Ausführungsform der Zellenradschleuse umfasst diese das Gehäuse 4 der ersten Ausführungsform und das Zellenrad 3 der ersten Ausführungsform.

Die Zellenradschleuse kann in kostengünstiger Weise aus einem für den jeweiligen Anwendungsfall geeignetem Material bzw. Materialmix gefertigt sein.

In vorteilhafter Weise kann das Zellenrad 3 Metall umfassen, insbesondere aus Metall und/oder einer Metalllegierung ausgebildet sein, um hohen Temperaturen standzuhalten und um besonders verschleißfest zu sein. In vorteilhafter Weise kann das Gehäuse 4 Metall umfassen, insbesondere aus Metall und/oder einer Metalllegierung ausgebildet sein, um hohen Temperaturen standzuhalten und um besonders verschleißfest zu sein.

Insbesondere kann die Zellenradschleuse, wie diese vorstehend im Detail beschrieben ist, von einem Heizsystems umfasst sein, welches Heizsystem weiters die Feuerungsanlage und das Lager umfasst. Die Zellenradschleuse verbindet das Lager mit der Feuerungsanlage, wobei die Einwurföffnung 1 mit dem Lager und die Auswurföffnung 2 mit der Feuerungsanlage derart verbunden sind, dass das brennbare Fördergut, insbesondere Holzpellets, vom Lager in die Feuerungsanlage gefördert werden können.

In diesem Zusammenhang kann insbesondere vorgesehen sein, dass das Heizsystem weiters eine Saugförderanlage umfasst, um das Lager mittels einer Saugförderung mit dem Fördergut zu befüllen. Dabei kann das Lager ein zur Feuerungsanlage benachbartes Kurzzeitlager, beispielsweise ein Tageslager zur Lagerung eines Tagesbedarfs des Fördergutes, sein und die Saugförderanlage das Kurzzeitlager mit einem Großlager, beispielweise einen Lagerraum zur Lagerung eines Jahresbedarfs des Fördergutes, des Heizsystems verbinden. Zum Betrieb der Feuerungsanlage wird eine vorgebbare Menge des Fördergutes mittels Saugförderung vom Großlager in das Kurzzeitlager gefördert und mittels der Zellenradschleuse vom Kurzzeitlager in die Feuerungsanlage gefördert. Während des Förderns des Fördergutes vom Großlager in das Kurzzeitlager mittels Saugförderung ist im Kurzzeitlager üblicherweise ein Unterdruck ausgebildet, welcher deutlich geringer als der Unterdruck in der Feuerungsanlage ist. Die erfindungsgemäße Zellenradschleuse verhindert ein druckunterschiedsbedingtes Strömen von Gasen, insbesondere Brenngasen, von der Feuerungsanlage in das Kurzzeitlager jedoch zuverlässig.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Zellenradschleuse zum Fördern oder Dosieren von rieselfähigem Fördergut, wobei die Zellenradschleuse ein Gehäuse (4) aufweist, in welchem ein Zellenrad (3), mit einer vorgebbaren Anzahl an Stegen (5), um eine Drehachse (30) drehbar gelagert ist, wobei das Gehäuse (4) eine Einwurföffnung (1) sowie eine Auswurföffnung (2) aufweist, wobei an einem ersten Gehäusebereich (41) zwischen der Einwurföffnung (1) und der Auswurföffnung (2) eine erste Druckausgleichsöffnung (7) angeordnet ist, wobei an einem zweiten Gehäusebereich (42) zwischen der Einwurföffnung (1) und der Auswurföffnung (2) eine zweite Druckausgleichsöffnung (8) angeordnet ist, wobei die erste Druckausgleichsöffnung (7) gegenüberliegend der zweiten Druckausgleichsöffnung (8) angeordnet ist, **dadurch gekennzeichnet, dass** - in einem zur Drehachse (30) normalen Querschnitt durch das Zellenrad 3 gesehen - wenigstens ein Steg (5) zur Ausbildung eines Rückhaltemittels (9, 10) wenigstens im Bereich der Druckausgleichsöffnungen (7,8) schaufelförmig ausgebildet ist und/oder dass zur Ausbildung des Rückhaltemittels (9, 10) der Steg (5) gegenüber der Drehachse (30) verwunden ist.

2. Zellenradschleuse nach Anspruch 1, **dadurch gekennzeichnet, dass** das Zellenrad (3) zwei Stirnstege (6) umfasst, wozu jeweils einer der beiden Stirnstege (6) jeweils im Bereich eines zweier Zellenradstirnenden des Zellenrades (3) ausgebildet ist, und dass die erste Druckausgleichsöffnung (7) benachbart zu einem der beiden Stirnstege (6) angeordnet ist und dass die zweite Druckausgleichsöffnung (8) benachbart zum anderen der beiden Stirnstege (6) angeordnet ist.

3. Zellenradschleuse nach einem der Ansprüche 1 bis 2, **dadurch gekennzeichnet, dass** an wenigstens einer Stirnseite des Gehäuses (4) eine dritte Druckausgleichsöffnung angeordnet ist.

4. Zellenradschleuse nach einem der Ansprüche 1 bis 3, **dadurch gekennzeichnet, dass** zwischen einem ersten Bereich des Gehäuses (4) und dem zu diesem ersten Bereich benachbarten Stirnsteg (6) ein erster Hohlraum ausgebildet ist, und dass die erste Druckausgleichsöffnung (7) in Wirkverbindung mit dem ersten Hohlraum ist.

5. Zellenradschleuse nach einem der Ansprüche 1 bis 4, **dadurch gekennzeichnet, dass** zwischen einem dem ersten Bereich gegenüberliegenden zweiten Bereich des Gehäuses (4) und dem zu diesem zweiten Bereich benachbarten Stirnsteg (6) ein zweiter Hohlraum ausgebildet ist, und dass die zweite Druckausgleichsöffnung (8) in Wirkverbindung mit dem zweiten Hohlraum ist.

6. Zellenradschleuse nach einem der Ansprüche 1 bis 5, **dadurch gekennzeichnet, dass** - in Richtung parallel zur Drehachse (30) gemessen - das erste Rückhaltemittel (9) wenigstens dieselbe Längserstreckung wie die Längserstreckung der ersten Druckausgleichsöffnung (7) und dass das zweite Rückhaltemittel (10) wenigstens dieselbe Längserstreckung wie die Längserstreckung der zweiten Druckausgleichsöffnung (8) aufweisen.

7. Zellenradschleuse nach einem der Ansprüche 1 bis 6, **dadurch gekennzeichnet, dass** der Steg (5) ein erstes Rückhaltemittel (9) und ein davon beabstandetes zweites Rückhaltemittel (10) aufweist.

8. Zellenradschleuse nach einem der Ansprüche 1 bis 7, wobei das Zellenrad (3) eine bevorzugte Förderdrehrichtung (33) aufweist, **dadurch gekennzeichnet, dass** der Steg (5) einen radial verlaufenden ersten Teilsteg (51) und einen an diesen ersten Teilsteg (51) anschließenden zweiten Teilsteg (52) aufweist, und dass der zweite Teilsteg (52) zur Ausbildung eines ersten Rückhaltemittels (9) gegen die bevorzugte Förderdrehrichtung (33) gegenüber dem ersten Teilsteg (52) abgewickelt ist.

9. Zellenradschleuse nach Anspruch 8, **dadurch gekennzeichnet, dass** der Steg (5) einen radial verlaufenden ersten Teilsteg (51) und einen an diesen ersten Teilsteg (51) anschließenden dritten Teilsteg (53) aufweist, und dass der dritte Teilsteg (53) zur Ausbildung eines zweiten Rückhaltemittels (10) in die bevorzugte Förderdrehrichtung (33) gegenüber dem ersten Teilsteg (52) abgewickelt ist.

10. Zellenradschleuse nach einem der Ansprüche 1 bis 9, **dadurch gekennzeichnet, dass** der Steg (5) benachbart zum Zentrum des Zellenrades (3) parallel zur Drehachse (30) ausgebildet ist, und dass der Steg (5) zur Drehachse (30) einen Winkel einschließt, und dieser Winkel mit steigendem Normalabstand des Steges (5) zum Zentrum des Zellenrades (3) zunimmt.

11. Heizsystem mit einem Lager und mit einer Feuerungsanlage, **gekennzeichnet durch** eine Zellenradschleuse nach einem der Ansprüche 1 bis 10, wobei eine Einwurföffnung (1) der Zellenradschleuse mit dem Lager und eine Auswurföffnung (2) der Zellenradschleuse mit der Feuerungsanlage verbunden sind, wodurch brennbares Fördergut, insbesondere Holzpellets, vom Lager in die Feuerungsanlage förderbar ist.

## Claims

1. A cellular wheel sluice for conveying or dosing pourable bulk material, wherein the cellular wheel sluice comprises a housing (4) in which a cellular wheel (3) with a predeterminable number of webs (5) is rotatably held about a rotational axis (30), wherein the housing (4) comprises an intake opening (1) and an ejection opening (2), wherein a first pressure compensation opening (7) is arranged in a first housing region (41) between the intake opening (1) and the ejection opening (2), wherein a second pressure compensation opening (8) is arranged in a second housing region (42) between the intake opening (1) and the ejection opening (2), wherein the first pressure compensation opening (7) is arranged opposite of the second pressure compensation opening (8), **characterized in that** at least one web (5), as seen in a cross-section which is normal to the rotational axis (30), is arranged in a blade-like manner for forming a retaining means (9, 10) at least in the region of the pressure compensation openings (7, 8), and/or that the web (5) is twisted in relation to the rotational axis (30) for forming the retaining means (9, 10).

2. A cellular wheel sluice according to claim 1, **characterized in that** the cellular wheel (3) comprises two face webs (6), for which purpose a respective one of the two face webs (6) is respectively arranged in the region of one of two cellular wheel face ends of the cellular wheel (3), and that the first pressure compensation opening (7) is arranged adjacent to one of the two face webs (6) and the second pressure compensation opening (8) is arranged adjacent to the other of the two face webs (6).

3. A cellular wheel sluice according to one of the claims 1 to 2, **characterized in that** a third pressure compensation opening is arranged on at least one face end of the housing (4).

4. A cellular wheel sluice according to one of the claims 1 to 3, **characterized in that** a first cavity is formed between a first region of the housing (4) and the face web (6) which is adjacent to said first region, and that the first pressure compensation opening (7) is operatively connected to the first cavity.

5. A cellular wheel sluice according to one of the claims 1 to 4, **characterized in that** a second cavity is formed between a second region of the housing (4) which is opposite of the first region and a face web (6) which is adjacent to said second region, and that the second pressure compensation opening (8) is operatively connected to the second cavity.

6. A cellular wheel sluice according to one of the claims 1 to 5, **characterized in that**, as measured in the direction parallel to the rotational axis (30), the first retaining means (9) has at least the same longitudinal extension as the longitudinal extension of the first pressure compensation opening (7), and that the second retaining means (10) has at least the same longitudinal extension as the longitudinal extension of the second pressure compensation opening (8).

7. A cellular wheel sluice according to one of the claims 1 to 6, **characterized in that** the web (5) comprises a first retaining means (9) and a second retaining means (10) which is spaced therefrom.

8. A cellular wheel sluice according to one of the claims 1 to 7, wherein the cellular wheel (3) has a preferred rotational conveying direction (33), **characterized in that** the web (5) comprises a radially extending partial web (51) and a second partial web (52) adjacent to said first partial web (51), and that the second partial web (52) is developed against the preferred rotational conveying direction (33) in relation to the first partial web (52) for forming a first retaining means (9).

9. A cellular wheel sluice according to claim 8, **characterized in that** the web (5) has a radially extending first partial web (51) and a third partial web (53) which is adjacent to said first partial web (51), and that the third partial web (53) is developed in the preferred rotational conveying direction (33) against the first partial web (52) for forming a first retaining means (9).

10. A cellular wheel sluice according to one of the claims 1 to 9, **characterized in that** the web (5) is arranged adjacent to the centre of the cellular wheel (3) parallel to the rotational axis (30), and that the web (5) encloses an angle with the rotational axis (30), and said angle increases with rising normal distance of the web (5) from the centre of the cellular wheel (3).

11. A heating system with a storage unit and furnace system, **characterized by** a cellular wheel sluice according to one of the claims 1 to 10, wherein an intake opening (11) of the cellular wheel sluice is connected to the storage unit and an ejection opening (2) of the cellular wheel sluice is connected to the furnace system, by means of which combustible bulk material, especially wood pellets, can be conveyed from the storage unit to the furnace system.

## Revendications

1. Écluse à roue cellulaire pour le transport et le dosage de matières transportées fluides, laquelle écluse à roue cellulaire présente un boîtier (4) dans lequel une roue cellulaire (3) comportant un nombre prédéfinissable de nervures (5) est disposée avec possibilité de rotation autour d'un axe de rotation (30), le boîtier (4) présentant une ouverture d'introduction (1) et une ouverture d'éjection (2), une première ouverture d'équilibrage de la pression (2) étant disposée dans une première zone du boîtier (41) entre l'ouverture d'introduction (1) et l'ouverture d'éjection (2), une deuxième ouverture d'équilibrage de la pression (8) étant disposée dans une deuxième zone du boîtier (42) entre l'ouverture d'introduction (1) et l'ouverture d'éjection (2), la première ouverture d'équilibrage de la pression (7) étant disposée en face de la deuxième ouverture d'équilibrage de la pression (8), **caractérisée en ce que** vue dans une coupe transversale de la roue cellulaire (3) perpendiculaire à l'axe de rotation (30), au moins une nervure (5) est en forme de pale afin de former au moins un moyen de retenue (9, 10) au moins au niveau des ouvertures d'équilibrage de la pression (7, 8) et/ou **en ce que** la nervure (5) est tordue par rapport à l'axe de rotation (30) pour former le moyen de retenue (9, 10).

2. Écluse à roue cellulaire selon la revendication 1, **caractérisée en ce que** la roue cellulaire (3) porte deux nervures frontales (6), chacune des deux nervures frontales (6) se trouvant dans la zone d'une des deux extrémités frontales de la roue cellulaire (3), et **en ce que** la première ouverture d'équilibrage de la pression (7) est disposée au voisinage de l'une des deux nervures frontales (6) et **en ce que** la deuxième ouverture d'équilibrage de la pression (8) est disposée au voisinage de l'autre des deux nervures frontales (6).

3. Écluse à roue cellulaire selon l'une des revendications 1 à 2, **caractérisée en ce qu'**une troisième ouverture d'équilibrage de la pression est disposée sur au moins une face frontale du boîtier (4).

4. Écluse à roue cellulaire selon l'une des revendications 1 à 3, **caractérisée en ce qu'**une première cavité est formée entre une première zone du boîtier (4) et la nervure d'extrémité (6) voisine de cette première zone, et **en ce que** la première ouverture d'équilibrage de la pression (7) est en liaison active avec la première cavité.

5. Écluse à roue cellulaire selon l'une des revendications 1 à 4, **caractérisée en ce qu'**une deuxième cavité est formée entre une deuxième zone du boîtier (4) faisant face à la première zone et la nervure frontale (6) voisine de cette deuxième zone, et **en ce que** la deuxième ouverture d'équilibrage de la pression (8) est en liaison active avec la deuxième cavité.

6. Écluse à roue cellulaire selon l'une des revendications 1 à 5, **caractérisée en ce que**, mesuré dans un sens parallèle à l'axe de rotation (30), le premier moyen de retenue (9) présente au moins la même étendue en longueur que la première ouverture d'équilibrage de la pression (7) et **en ce que** le deuxième moyen de retenue (10) présente au moins la même étendue en longueur que la deuxième ouverture d'équilibrage de la pression (8).

7. Écluse à roue cellulaire selon l'une des revendications 1 à 6, **caractérisée en ce que** la nervure (5) présente un premier moyen de retenue (9) et un deuxième moyen de retenue (10) écarté de celui-ci.

8. Écluse à roue cellulaire selon l'une des revendications 1 à 7, dans laquelle la roue cellulaire (3) présente un sens de rotation pour le transport préférentiel (33), **caractérisée en ce que** la nervure (5) présente une première partie de nervure (51) orientée dans le sens radial et une deuxième partie de nervure (52) faisant suite à cette première partie de nervure (51), et **en ce que** la deuxième partie de nervure (52) est développée par rapport à la première partie de nervure (52) contre le sens de rotation pour le transport préférentiel (33) afin de former un premier moyen de retenue (9).

9. Écluse à roue cellulaire selon la revendication 8, **caractérisée en ce que** la nervure (5) présente une première partie de nervure (51) orientée dans le sens radial et une troisième partie de nervure (53) faisant suite à cette première partie de nervure (51), et **en ce que** la troisième partie de nervure (53) est développée par rapport à la première partie de nervure (52) contre le sens de rotation pour le transport préférentiel (33) afin de former un deuxième moyen de retenue (10).

10. Écluse à roue cellulaire selon l'une des revendications 1 à 9, **caractérisée en ce que** la nervure (5) est formée au voisinage du centre de la roue cellulaire (3) parallèlement à l'axe de rotation (30), et **en ce que** la nervure (5) forme un angle par rapport à l'axe de rotation (30), et cet angle augmente avec la distance sur la perpendiculaire de la nervure (5) par rapport au centre de la roue cellulaire (3).

11. Système de chauffage avec un stockage et une installation de combustion, **caractérisé en ce qu'**il comprend une écluse à roue cellulaire selon l'une des revendications 1 à 10 dont une ouverture d'introduction (1) est reliée au stockage et une ouverture d'éjection (2) à l'installation de combustion, de sorte que des matières transportées combustibles, en particulier des granulés de bois, peuvent être transportées du stockage à l'installation de combustion.
